Europäisches Patentamt

European Patent Office

Office européen des brevets

(11) Publication number: **0 090 261**
A2

(12) # EUROPEAN PATENT APPLICATION

(21) Application number: 83102595.2

(22) Date of filing: 16.03.83

(51) Int. Cl.³: **F 26 B 17/20,** F 26 B 3/24, F 26 B 7/00

(30) Priority: 30.03.82 JP 53053/82

(43) Date of publication of application: 05.10.83
Bulletin 83/40

(84) Designated Contracting States: DE FR GB

(71) Applicant: Kurimoto, Ltd., 12-19, Kitahorie 1-chome, Nishi-ku Osaka-shi Osaka (JP)

(72) Inventor: Toei, Ryozo, 11-1, Yanada-cho Shimogamo, Sakayo-ku, Kyoto-shi Kyoto (JP)
Inventor: Takahashi, Kanichi, 38-9, Yuyumadai 2-chome, Kawanishi-shi Hyogo (JP)
Inventor: Mizuta, Koji, 11, 4-chome Bodai-cho, Sakai-shi Osaka (JP)
Inventor: Ohashi, Koji, 2649-445, Oyamada-cho, Kawachi Nagano-shi Osaka (JP)
Inventor: Hizuka, Kazuhiko, 1-510, 3-chome, Ichigaya-cho, Nishinomiya-shi Hyogo (JP)

(74) Representative: Glawe, Delfs, Moll & Partner Patentanwälte, Postfach 26 01 62 Liebherrstrasse 20, D-8000 München 26 (DE)

(54) Drying apparatus.

(57) An improved drying machine for powder and granular material is proposed in which gas is supplied from under at a lower velocity than the minimum fluidization velocity. The material is agitated and heated by a heater/agitator member. The gas flow serves to decrease the agitating load of the material to be dried.

## DRYING APPARATUS

The present invention relates to an apparatus for drying a powder or granular material, such as resin powder and coal powder, mainly by heat conduction.

In the conventional dryer of this type, hot air is supplied to the space over the material to be dried to prevent the decrease in the drying rate caused by the vapor filled in the material layer. Because the amount of the exhaust gas is not so much, the heat taken out by the exhaust gas is not so much, either and therefore the heat efficiency is high. However, it has the following defects. Firstly, because hot gas is not supplied from the bottom of the dryer toward the material layer, the expansion of the material layer does not occur. Therefore, a considerable power is required for mechanical agitating of the material at standstill. Secondly, because the agitating mechanism is of a rigid construction, the weight of the apparatus is substantial. Thirdly, because of a sluggish movement of the material in its layer, the heat transfer to the layer is poor and the moisture content is slow to remove. Because of high water vapor pressure, it takes a long time to dry up the material to a low moisture content.

An object of the present invention is to provide a dryer of this type which obviates the above-mentioned defects.

- 1 -

Other objects and features of the present invention will become apparent from the following description taken with reference to the accompanying drawings, in which:

Fig. 1 is a vertical sectional front view of a dryer embodying the present invention;

Fig. 2 is a vertical sectional side view of the same;

Fig. 3 is a plan view of the same;

Fig. 4 is a partially sectional side view of another example of the heater/agitator member;

Fig. 5 is a partially cutaway perspective view of a further example of the heater/agitator member;

Fig. 6 is a vertical sectional front view of an apparatus used for experiment;

Fig. 7 is a vertical sectional side view of the same; and

Figs. 8-10 are graphs showing the results of the experiments.

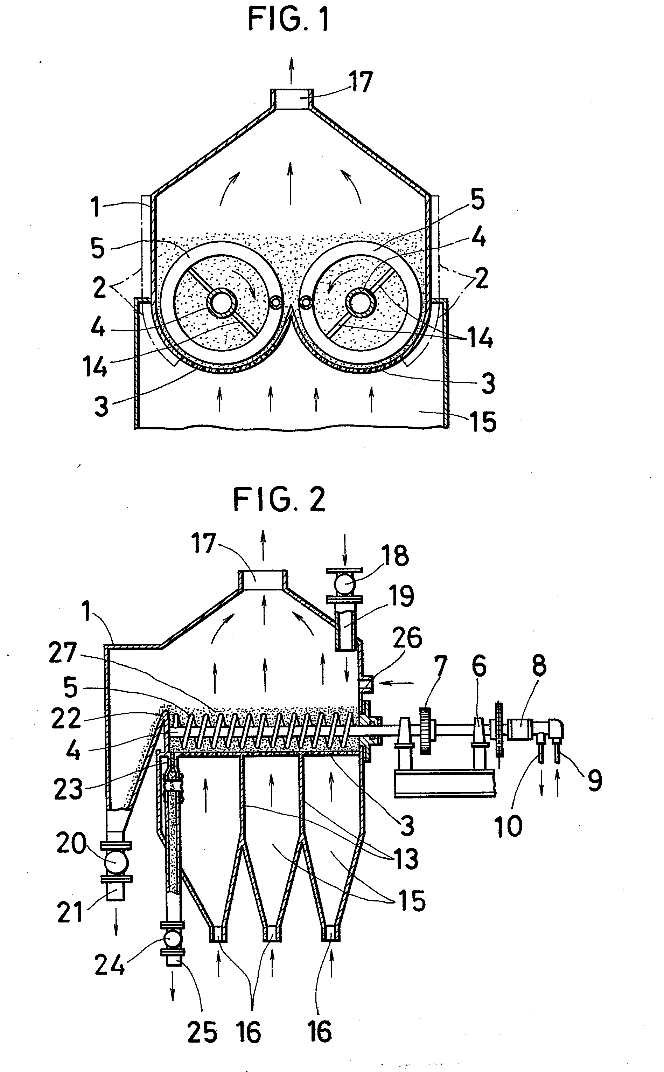

Referring to Figs. 1 and 2, numeral 1 designates a dryer body. Its bottom is of a semi-circular cross-section and has a perforated plate 3 for gas distribution. A dual-axis dryer as shown in Fig. 1 has two plates 3 arranged side by side and a single-axis dryer has one plate 3.

A rotary shaft 4 is provided over each perforated
plate 3.  A heater/agitator member 5 is mounted on each
rotary shaft 4 to serve as an agitating member and a
heat transfer surface.  In the preferred embodiment,
the member 5 comprises a pipe spirally wound around
the shaft 4 and having its both ends connected to the
shaft. (Fig. 2)

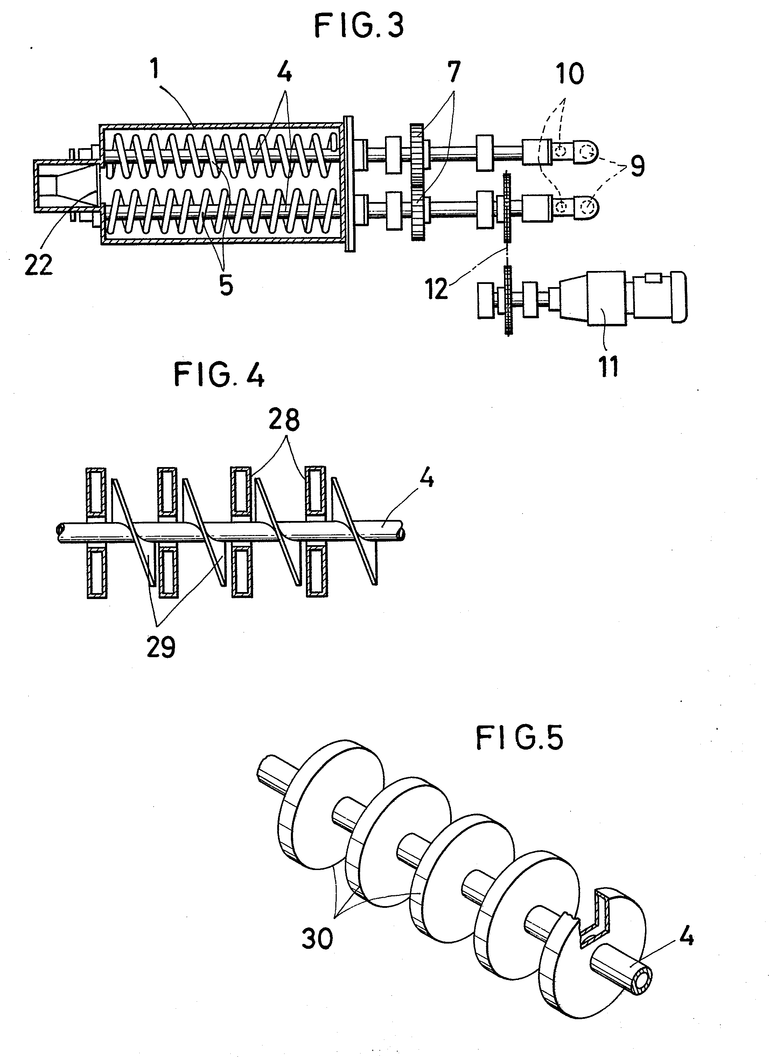

The rotary shaft 4 is hollow and extends rotatably
and gastightly through the wall of the dryer body 1.
It is supported by means of a bearing 6 and driven by
a drive comprising a motor 11 and a transmission chain
12.  If a pair of the shafts 4 are provided as shown
in Figs. 1 and 3, they may be interlocked by means of
gears 7 to rotate them in opposite directions.

To the outer end of each rotary shaft 4 are connected
an inlet 9 and an outlet 10 for a heat medium through
a rotary joint 8.  Heat medium such as steam enters
the rotary shaft 4 from the inlet 9, leaves it from
its inner end into the spiral member 5, and flows into
a return pipe in the rotary shaft 4 toward the outlet
10.

A support 14 (Fig. 1) may be provided to keep the
member 5 coaxial with the rotary shaft 4.  The support
may be in the form of a rod or a pipe.  In the latter
case, the heat medium may be passed through the support 14. Also, the support may be fan-shaped for greater heat transfer surface.

Under the dryer body 1 there is provided a gas chamber 15. It may, or may not, be divided into a plurality of chambers 15 having a gas inlet 16 at their bottom.

A gas outlet 17 is provided at top of the dryer body 1. At top of its one side there are provided a supply port 19 for supplying the material to be dried and a rotary feeder 18. At bottom of the other side there are provided a rotary discharger 20 and a discharge port 21 for the material.

A weir 22 (Fig. 2) is provided adjacent to the inner end of the rotary shafts 4. The perforated plates 3 are provided with a rough particle discharge port 23 to which a discharge pipe 25 having a rotary feeder 24 at its bottom is connected.

A carrier gas inlet 26 is provided in the end wall of the dryer body under the supply port 19 to blow a carrier gas into the dryer to prevent dew condensation. But, the carrier gas inlet may be omitted.

In operation, the powder or granular material to be dried is supplied into the dryer 1 through the port 19 to form a material layer 27. The material is agitated, heated and dried by means of the heater/agitator members 5 through which the heat medium flows. The gas blown

- 4 -

0090261

up through the holes in the perforated plates 3 serves
to decrease the agitating load of the material, allowing
it to be agitated with a low torque.

The material thus dried overflows the weir 22 and
is discharged from the port 21 by means of the rotary
discharger 20. The coarse particles are discharged
through the port 23 and the rotary discharger 24 from
the discharge pipe 25. If the heater/agitator member
5 is of a spiral shape, it also serves to feed the material
toward the discharge port 21 as it rotates.

In the dryer according to the present invention,
the speed at which the gas is blown into the material
layer from under may be lower than the speed at which
the material to be dried starts to fluidize. Even if
it is lower than that, the gas flow is effective to
decrease the agitating load of the material. Since
the dryer body has in its bottom two troughs of a semi-
circular section, its periphery extending along the
locus of the spiral blade 5 with an equal distance,
the entire material layer is uniformly agitated. Even
the material at the bottom does not stay there. The
material is easily dispersed and mixed in the layer.
As the gas blow-in speed increases, the agitating torque
decreases sharply. Experiments showed that in accordance
with the present invention the agitating torque will

- 5 -

be about one-third to one-fifth of that in the conventional dryer of this type in which no gas is blown from under.

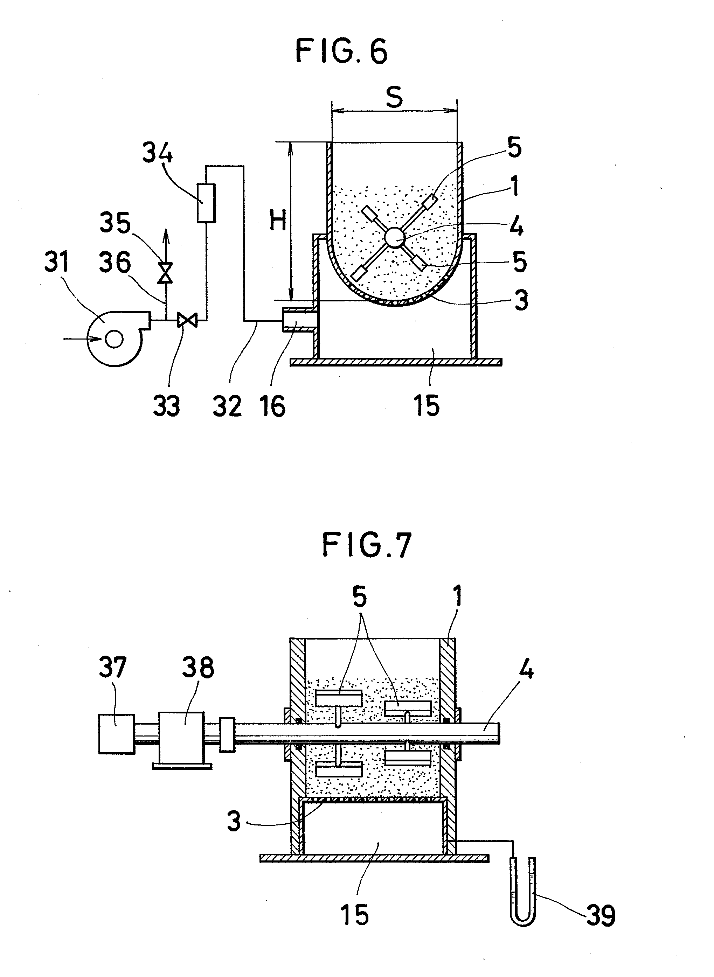

Figs. 6 and 7 show an apparatus used for experiments in which the dryer body 1 has a width of 260 mm and a depth of 330 mm and two heater/agitator members 5 having different diameters (one is 240 mm dia. and the other is 180 mm dia.) are mounted on the rotary shaft 4. Gas is supplied from a blower 31 through a piping 32 to a gas inlet 16 of the dryer 1. A valve 33, a flowmeter 34, and an exhaust pipe 36 with a valve 35 are provided.

In Fig. 7, the rotary shaft 4 is driven by a drive 37. A torque detector 38 and a pressure gauge 39 are provided.

The above-mentioned apparatus for experiment was used to measure the torque, using millet and maltose as the sample. The former is dry and free-flowing and the latter is irregular and cohesive. The table 1 shows the properties of samples.

Table 1

| Sample | Particle size (In $\mu$m) | bulk density (in kg/m$^3$) | minimum fluidization Velocity Umf (in m/second) |
|---|---|---|---|
| Millet | 1500-1700 | 800 | 0.43 |
| Maltose(1) | 840-1700 | 490 | 0.37 |
| Maltose(2) | 300-840 | 490 | 0.11 |

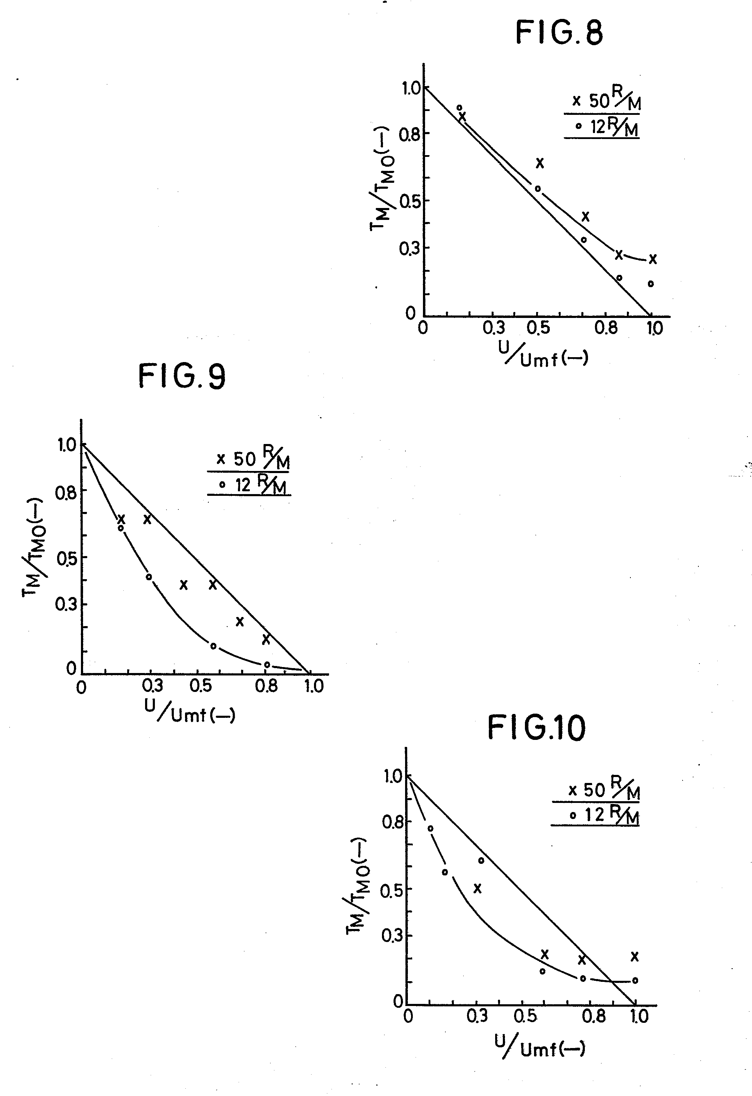

Figs. 8-10 show the result of experiments in which the torque was measured with the samples shown in Table 1 by use of the apparatus of Figs. 6 and 7.

Fig. 8 is the graph for millet in which the torque ratio of the torque when gas in blown to the torque when no gas is supplied from under is plotted along the ordinate axis and the ratio of the gas velocity to the minimum fluidization velocity is plotted along the abscissa axis. Fig. 8 shows that the agitating torque decreases substantially linearly as the gas flow rate increases, and that when the flow rate comes near the minimum fluidization velocity, the torque will be one third to one fourth of that when no gas is supplied from under.

Figs. 9 and 10 are for maltoses which have a poor flowability. These graphs show that as the gas flow rate increases, the agitating torque decreases sharply and at the minimum fluidization velocity the torque will be about one tenth of that when no gas is supplied. This shows that the supply of gas from under is markedly effective for poorly free-flowing materials.

Thus, the powder or granular material is dispersed and mixed even at a gas velocity below the minimum fluidization velocity by a mechanical agitating effect. Therefore, even if the gap between the heater/agitator member 5

- 7 -

and the perforated plate 3 is large, the powder or granular material will not settle. This does not require the manufacturing accuracy and reduces the weight of the dryer.

The contact between the material and the heater/agitator member is continually renewed by the gas-through-flow and agitating effect. This results in rapid transfer of heat and moisture vapor. Also, the vapor pressure in the material layer is low, the temperature rise of the material is small, and partial heating of the material does not occur. Therefore, the dryer according to the present invention can be used with higher temperature source than in the conventional dryer of this type. In other words, the temperature difference between the material and the heater/agitator members 5 can be kept higher. Therefore, the drying rate is higher and the material can be dried to a lower moisture content.

The material can be dried fully with lower power requirement for driving the rotary member. 5. This makes it possible to make a full use of the heat transfer area of the members 5 by filling the material in the chamber with higher hold up.

In short, in accordance with the present invention in which gas is supplied from under, the material can be dried more efficiently and more rapidly to a lower moisture content than in the conventional dryer of this type. Also, the maintenance and operating costs can be reduced because the power requirement to agitate the material is less.

In accordance with the present invention, the velocity of gas supplied from under may be smaller than the minimum fluidization velocity.

If owing to too small an amount of the gas supplied the exhaust gas might condense with the moisture vapor, carrier gas may be blown into the dryer through a port 26 (Fig. 4).

In the preferred embodiment the gas chamber 15 is divided by the plates 13 into a plurality of sections for which different gas velocities can be used, because the property of the material differs with the degree of cohesion dependent on the moisture content.

Although in the preferred embodiment a pair of rotary shafts 4 are arranged side by side, the shaft may be single or they may be arranged one above the other.

The rotary shafts 4 may be adapted to turn in one direction or the other. Although in the embodiment the surface on the heater/agitator member 5 is used as a heating surface, a heating jacket 2 (as illustrated in Fig. 1 by a dotted line) may be provided on the wall of the body 1, or stationary heating pipes or plates 28 (as shown in Fig. 4) may be fixed in the body 1 to heat the material with a heat medium passed therethrough.

In Fig. 4, the rotary shaft 4 extending through the heating plates 28 is provided with agitating blades 29 which may be spiral or of any other shape.

Referring to Fig. 5, another example of heater/agitator member is shown which has a plurality of disc plates 30 fixed on the rotary shaft 4, said disc plates being hollow to hold a heat medium.

As the gas supplied into the dryer, air at ambient temperature or hot air may be used. If the latter is used, the heat transfer area for indirect heating can be reduced because heat transfers also by convection.

What are claimed are:

1.     A dryer for drying powder or granular material
comprising:

a body having an inlet and an outlet for the material,

an agitator means for agitating the material,

a heater means for heating the material, and said
body being provided in the bottom thereof with a perforated
plate for gas distribution,

a gas chamber provided under said body for blowing
gas into said body through said perforated plate, whereby
decreasing the agitating load of the material to be
dried.

2.     The dryer as claimed in claim 1, wherein said
agitator means comprise a spiral pipe mounted on a rotary
shaft and adapted to pass a heat medium therethrough,
said spiral pipe also serving as said heater means.

3.     The dryer as claimed in claim 1, wherein said
agitator means comprise a plurality of blades mounted
on a rotary shaft and said heater means comprise a plurality
of stationary pipes or hollow plates adapted to pass
a heat medium therethrough.

0090261

4.      The dryer as claimed in claim 1, wherein said agitator means comprise a plurality of hollow disc plates mounted on a rotary shaft, said hollow disc plates also serving as said heating means.

5.      The dryer as claimed in any of claims 1-4, further comprising a heating jacket provided on the wall of said body as an additional heating means.

6.      The dryer as claimed in any of claims 1-5, wherein hot air is used as the gas blown through said perforated plate.

FIG.1

FIG.2

## FIG.3

## FIG.4

28

4

29

## FIG.5

30

4

# FIG. 6

# FIG.7

## FIG.8

## FIG.9

## FIG.10